# EUROPEAN PATENT APPLICATION

(11) **EP 0 710 017 A2**
(43) Date of publication of application: **01.05.1996**
(21) Application number: 95307350.9
(22) Date of filing: 13.10.1995
(51) Int. Cl.: H04N 5/44

(54) **Television receiver with an interface for the displaying and communication of data**

(30) Priority: 28.10.1994 GB 9421840
(71) Applicant: PLESSEY SEMICONDUCTORS LIMITED, Swindon, Wiltshire SN2 2QW (GB)
(72) Inventor: Minett, Peter John, Swindon, Wiltshire SN5 9NH (GB)
(74) Representative: Hoste, Colin Francis

(57) **Abstract**

A broadcast television receiver set comprises an auxiliary receiver means for receiving data signals over a non-wired transmission path, data signal processing means (3) for processing data signals received over the transmission path and means to display video information derived from the data signal processing means as images on the main display screen (4) of the television set. The data signal processing means may comprise data decompression means for decompressing received compressed video data. The transmission link may be infrared and may involve a modification of an existing IR remote-control receiver in the television set. The auxiliary receiver means may be adapted to receive data signals under a data-transmission protocol employed by a portable computer, e.g. a personal digital assistant (5) or a laptop/notebook. The television set may also comprise transmitting means (9), auxiliary processing means and data-storage means (10) for establishing a two-way link between a portable computer and for providing extension processing and storage facilities for the computer.

## Description

The invention concerns a television remote-control arrangement comprising a television set having a remote-control receiver and associated processing circuitry and a remote transmitter for transmitting date to the television set, the remote-control arrangement operating especially, but not exclusively, by infrared transmission.

Conventional remote-control arrangements employ remote transmitters which are handheld and dedicated to the task involved, namely the control of typical television functions such as channel selection, sound level and picture brightness. Also, the processing circuitry employed in the television set is dedicated to the decoding of such control signals. As such, the known remote-control arrangements are limited in what they can contribute to the functioning of a television set.

In accordance with the invention, there is provided a broadcast television receiver set comprising auxiliary receiver means for receiving data signals over a non-wired transmission path, data signal processing means for processing data signals received over the transmission path and means to display video information derived from the data signal processing means as images on the main display screen of the television set.

The data signal processing means may comprise circuitry for decompressing compressed video data received by the auxiliary receiver means.

The auxiliary receiver means may be arranged to receive data signals over an infrared link, a wireless LAN (local area network) link or an ultrasonic link. Where the link is infrared, the auxiliary receiver means may comprise a remote control receiver for the television set, the remote control receiver being arranged to pass data signals to the data signal processing means.

The auxiliary receiver means may be arranged to receive data signals according to a data-transmission protocol employed by a portable computer such as a personal digital assistant or a notebook or a laptop computer.

The broadcast television receiver set may comprise further auxiliary processing means and a transmitting means for transmitting data to the portable computer, the auxiliary receiver means and the transmitting means forming a two-way communication link with the portable computer and the auxiliary processing means being connectable to the data signal processing means and to the transmitting means such as to serve as a co-processor for the computer.

The television receiver set may comprise an auxiliary storage device connectable to the data signal processing means and to the transmitting means such as to serve as an extension data storage facility for the computer.

A read-only memory, which may take the form of a CD-ROM, may form part of the broadcast television receiver set, the read-only memory being connectable to the data signal processing means and/or to the transmitting means such as to serve as an extended source of programs for the computer.

Interfacing means may be provided in the television set for interfacing the data processing means and the transmitting means to a network or to a telephone system, whereby two-way transfer of data can be established between the portable computer and a user of the network or telephone system.

The broadcast television receiver set may comprise control means for controlling various functions such as channel selection, sound level control and teletext, the control means being driven from the data signal processing means in response to control data transmitted by the portable computer.

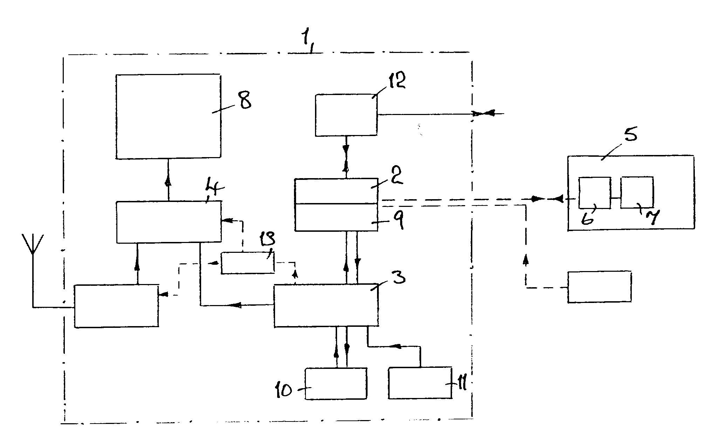

The invention will now be described, by way of example, with reference to the accompanying drawing, which shows a broadcast television set schematically.

Referring to the drawing, a broadcast television receiver set 1 according to the invention comprises a auxiliary receiver means 2 in the form of an infrared receiver adapted to receive data according to the transmission protocol employed by a small portable computer. A preferred protocol is the Data Association Serial Infrared MAC and Link Protocol version 3.0 Dec 31993, as sponsored by the computer manufacturers IBM, Hewlett Packard and Apple. Also included in the television set 1 is a data signal processing means 3 which takes the data received by the auxiliary receiver 2, decompresses any video data received, decodes it and passes it on in decoded form to the main display circuitry 4 of the television set. The above protocol supports the short-range infrared transfer of data at a rate of approximately 100K bits per second, which is sufficient to transfer compressed video information from a portable computer to the television set.

The television set of the invention may be used in conjunction with a personal digital assistant (PDA) 5 which has an infrared transmitter 6 operating under the above protocol and a video data compressor 7. The compressor 7, on command from the PDA 5, takes the video data content of the small screen (not shown) of the PDA 5, compresses it and then transmits it by means of the transmitter 6 to the television set 1 at the maximum transfer rate of the system, namely 100K bits per second, as mentioned above. The television 1 thus acts essentially as a visual extension of the PDA 5 in order to provide a more easily viewable display of the PDA's visual data. There is the added bonus that the television display means 8 can be a colour display, in contrast to the normal monochrome display of a PDA 5.

In addition to the auxiliary infrared receiver 2 and the data signal processing means 3, the broadcast television set 1 includes an infrared transmitter 9 corresponding to that of the PDA 5, i.e. the transmitter 9 operates under the same protocol as the PDA transmitter 6 and the television auxiliary receiving means 2. Further to this, the television set 1 is also equipped with a storage device 10 in the form of additional RAM and an auxiliary microprocessor (not shown). The additional RAM is arranged to be accessable by the data signal processing means 3 and to be readable into the transmitter 9 incorporated into the television set 1. Interfacing between the RAM and the transmitter 9 is selectably by way of the data signal processing means 3 or the additional microprocessor. With these additional elements it is possible for two-way communication to take place between the PDA 5 and the television set 1, the RAM acting as an extension hard disk for the PDA 5 and the microprocessor performing the function of a co-processor, relieving the burden on the PDA processor circuity itself and enabling the PDA 5 to perform above its natural capacity.

In this way, the television set 1 acts also as a processing and storage extension of the PDA 5.

In a preferred embodiment of the invention, the television set 1 also includes a CD-ROM (read-only memory) 11 containing a suite of programs for use by the PDA 5. The PDA 5 is able to access the CD-ROM 11 by means of the infrared link and the data signal processing means 3, the program data on the CD-ROM 11 being either processed in the data signal processing means 3 itself or in the auxiliary microprocessor, or transferred to the PDA 5 for processing, via the television's infrared transmitter 9.

The preferred embodiment also includes interfacing links 12 between the television set and a public network or a telephone system. The two-way communication that exists between the PDA 5 and the television set 1 can now take place between the PDA 5 and other users on the network/telephone system. The PDA 5 thus acts as a data terminal such that messages can be transmitted to other users in the system by keying or writing into the PDA 5 the message to be transmitted and then issuing the command to transmit the message to the television set 1 where it is relayed onto the network or television system. In the case of a connection with the telephone systemi; the PDA 5 can act as a telephone, provided it has a sound card and a small speaker (not shown) capable of reproducing received audio messages.

In addition, the preferred embodiment comprises an auxiliary control means 13 which is fed from the data signal processing means 3 and effects control of more standard TV functions such as channel selection, sound level control, teletext, etc. Even a video recorder (not shown) could be controlled from the PDA 5 if the recorder were linked to the television set 1.

In place of a PDA 5 a laptop or notebook computer can be employed for the remote-control arrangement of the invention, or indeed any computer provided with a wireless data communication facility.

The invention can be used to advantage with a games computer by incorporating into the latter a remote-control transmitter operating under a protocol similar to that mentioned above in connection with the PDA 5. In this case, the large colour display that would be obtained on the television set 1 would enable the often tiny characters that are seen on games computers' screens to be clearly identified.

While the invention has been described in terms of infrared communication between the television set 1 and the computer device, other media are equally applicable, e.g. radio, visible light, ultrasonics.

## Claims

1. A broadcast television receiver set comprising auxiliary receiver means for receiving data signals over a non-wired transmission path, data signal processing means for processing data signals received over the transmission path and means to display video information derived from the data signal processing means as images on the main display screen of the television set.

2. A broadcast television receiver set as claimed in Claim 1, in which the data signal processing means comprises circuitry for decompressing compressed video data received by the auxiliary receiver means.

3. A broadcast television receiver set as claimed in Claim 1 or Claim 2, in which the auxiliary receiver means is arranged to receive data signals over an infrared link.

4. A broadcast television receiver set as claimed in Claim 3, in which the auxiliary receiver means comprises a remote control receiver for the television set, the remote control receiver being arranged to pass data signals to the data signal processing means.

5. A broadcast television receiver set as claimed in Claim 1 or Claim 2, in which the auxiliary receiver means is arranged to receive data signals over a wireless local area network link.

6. A broadcast television receiver set as claimed in Claim 1 or Claim 2, in which the auxiliary receiver means is arranged to receive data signals over an ultrasonic link.

7. A broadcast television receiver set as claimed in any one of the preceding claims, in which the auxiliary receiver means is arranged to receive data signals according to a data-transmission protocol employed by a portable computer such as a personal digital assistant or a notebook or a laptop computer.

8. A broadcast television receiver set as claimed in Claim 7, comprising further auxiliary processing means and a transmitting means for transmitting data to the portable computer, the auxiliary receiver means and the transmitting means forming a two-way communication link with the portable computer and the auxiliary processing means being connectable to the data signal processing means and to the transmitting means such as to serve as a co-processor for the computer.

9. A broadcast television receiver set as claimed in Claim 8, comprising an auxiliary storage device connectable to the data signal processing means and to the transmitting means such as to serve as an extension data storage facility for the computer.

10. A broadcast television receiver set as claimed in Claim 8 or Claim 9, comprising a read-only memory connectable to the data signal processing means and/or to the transmitting means such as to serve as an extended source of programs for the computer.

11. A broadcast television receiver set as claimed in Claim 10, in which the read-only memory is a CD-ROM.

12. A broadcast television receiver set as claimed in any one of Claims 8 to 11, comprising interfacing means for interfacing the data processing means and the transmitting means to a network or to a telephone system, whereby two-way transfer of data can be established between the portable computer and a user of the network or telephone system.

13. A broadcast television receiver set as claimed in any one of Claims 7 to 12, comprising control means for controlling various functions such as channel selection, sound level control and teletext, the control means being driven from the data signal processing means in response to control data transmitted by the portable computer.

14. A television set substantially as hereinbefore described.
